# EUROPÄISCHE PATENTSCHRIFT

(11) **EP 4 015 701 B1**
(45) Veröffentlichungstag und Bekanntmachung des Hinweises auf die Patenterteilung: **26.06.2024**
(21) Anmeldenummer: 22156067.5
(22) Anmeldetag: 18.11.2015
(51) Int. Cl.: D06F 67/04, D06F 95/00

(54) **VERFAHREN ZUM ZUFÜHREN VON WÄSCHESTÜCKEN ZU EINER MANGEL ODER EINER SONSTIGEN WÄSCHEBEHANDLUNGSEINRICHTUNG**
METHOD FOR FEEDING LAUNDRY ITEMS TO A MANGLE OR ANOTHER LAUNDRY TREATMENT DEVICE
PROCÉDÉ D'INTRODUCTION DE LINGE DANS UNE CALANDRE OU À UN AUTRE DISPOSITIF DE TRAITEMENT DU LINGE

(30) Priorität: 26.11.2014 DE 102014017477
(43) Veröffentlichungstag der Anmeldung: 22.06.2022
(62) Teilanmeldung aus: 15003276.1
(73) Patentinhaber: Herbert Kannegiesser GmbH, 32602 Vlotho (DE)
(72) Erfinder: Sielermann, Jürgen, 73540 Heubach (DE); Bringewatt, Wilhelm, 32457 Porta Westfalica (DE); Heinz, Engelbert, 32602 Vlotho (DE)
(74) Vertreter: Hoener, Matthias

(56) Entgegenhaltungen:
- EP-A2- 0 372 320
- EP-A2- 2 444 544
- JP-B2- 5 396 155

## Beschreibung

Die Erfindung betrifft ein Verfahren zum Zuführen von Wäschestücken zu einer Mangel oder einer sonstigen Wäschebehandlungseinrichtung gemäß dem Oberbegriff des Anspruchs 1. Des Weiteren betrifft die Erfindung eine Vorrichtung zum Zuführen von Wäschestücken zu einer Mangel oder einer sonstigen Wäschebehandlungseinrichtung gemäß Anspruch 4.

Wäschestücke werden nach dem Waschen und Trocken als sogenannte Trockenwäsche in einer Mangel gemangelt und dabei von ihrer Restfeuchte befreit oder sogleich in einer Falteinrichtung gefaltet. Die Wäschestücke müssen im ausgebreiteten Zustand der Mangel, Falteinrichtung oder einer sonstigen Wäschebehandlungseinrichtung zugeführt werden. Das erfolgt maschinell durch Eingabemaschinen. Diese weisen einen Zuführförderer auf, der das darauf ausgebreitet liegende Wäschestück in die Mangel oder eine sonstige Wäschebehandlungseinrichtung eingibt.

Die Wäschestücke werden einzeln der Eingabemaschine zugeführt, beispielweise durch Auflegen auf den Zuführförderer oder Einhängen in Spreizklammern, die das Wäschestück vor dem Zuführförderer ausbreiten und auf demselben ablegen. Das Einhängen der einzelnen Wäschestücke in die Klammern der Eingabemaschine, aber auch das direkte Auflegen jedes einzelnen Wäschestücks auf den Zuführförderer erfolgen bislang manuell. Dies ist beispielsweise in EP 0 372 320 A2, JP 5 396155 B2 oder EP 2 444 544 A2 offenbart.

Die bekannten Methoden erweisen sich als zeit- und personalaufwendig. Es sind zwar schon Ansätze zur Automatisierung dieser Tätigkeiten gemacht worden. Diese sind meist daran gescheitert, dass es schwierig ist, automatisch benachbarte Ecken einer vorderen Kante von Wäschestücken mit vertretbarem maschinellen Aufwand zuverlässig zu finden und zu ergreifen.

Der Erfindung liegt daher die Aufgabe zugrunde, ein Verfahren und eine Vorrichtung zu schaffen, womit auf einfache und zuverlässige Weise Wäschestücke automatisch einer Mangel, Faltmaschine oder einer sonstigen Wäschebehandlungseinrichtung zuführbar sind.

Ein Verfahren zur Lösung der genannten Aufgabe weist die Maßnahmen des Anspruchs 1 auf. Demnach ist es vorgesehen, bei an einer Ecke gehaltenem Wäschestück die tiefste Stelle des von der gehaltenen Ecke herunterhängenden Wäschestücks zu ergreifen und das Wäschestück dann durch Auseinanderbewegen dieser Ecken zu strecken, insbesondere nur leicht zu strecken. Dadurch bilden sich die übrigen Ecken des Wäschestücks so aus, dass sie eine greiffähige und/oder eine zur Bilderfassung geeignete Position einnehmen. Dann kann das Wäschestück automatisch auch an einer solchen sich ausbildenden Ecke ergriffen werden, wonach das Wäschestück dann an gezielten Ecken, vorzugsweise benachbarten Ecken einer vorderen Kante, gehalten wird.

Das Verfahren ist so ausgestaltet, dass das an diagonal gegenüberliegenden Ecken gehaltene Wäschestück gestreckt wird. Dabei bilden sich dann zwei freie Ecken aus, die zu jeder der gehaltenen Ecken benachbart sind. Auf diese Weise werden einfach automatisch benachbarte Ecken des Wäschestücks ermittelt und anschließend gezielt maschinell ergriffen.

Das Verfahrens sieht es vor, die Positionen der sich beim Strecken des Wäschestücks an vorzugsweise diagonal gegenüberliegenden Ecken ausbildenden freien Ecken bei der Ermittlung des Oberflächenprofils des Wäschestücks durch vorzugsweise ein bildgebendes Verfahren automatisch zu ermitteln. Auf diese Weise lassen sich durch Auswertung des aufgenommenen Bilds des Wäschestücks rechnerisch die Positionen der beim Strecken sich ausbildenden freien Ecken ermitteln, und zwar gegebenenfalls auch dreidimensional, wodurch sich die Positionen der beim Strecken des Wäschestücks sich ausbildenden freien Enden im Raum, insbesondere ihre Koordinaten, ergeben. Daraus kann auch festgestellt werden, welche der freien Ecken, die benachbart zu einer bestimmten gehaltenen Ecke des Wäschestücks ist, eine kurze oder eine lange Kante des Wäschestücks begrenzt. Es kann dann das Wäschestück automatisch so ergriffen werden, wie es an die nachfolgende Wäschebehandlungseinrichtung, beispielsweise im Zuführförderer einer Eingabeeinrichtung vor einer Mangel, übergeben werden soll.

Weiter ist es vorgesehen, ein Oberflächenprofil des jeweils zuzuführenden Wäschestücks oder mehrerer Wäschestücke eines Haufens aufzunehmen. Aufgrund dieses vorzugsweise dreidimensionalen Oberflächenprofils lässt sich insbesondere durch Bildauswertung eine gewünschte oder leicht zu ergreifende Stelle des jeweils der Wäschebehandlungseinrichtung zuzuführenden Wäschestücks ermitteln bzw. aussuchen und/oder die Position dieser Stelle bestimmen. Das Wäschestück kann dann automatisch an dieser Stelle zuverlässig ergriffen werden.

Bevorzugt ist es vorgesehen, durch bildgebende Maßnahmen oder Einrichtungen ein mehrdimensionales, gegebenenfalls dreidimensionales, Bild zu erzeugen. Durch eine entsprechende, bevorzugt elektronische, Bildauswertung kann die gewünschte Stelle oder die am einfachsten zu ergreifende Stelle des Wäschestücks bestimmt werden, beispielsweise die Koordinaten derselben, die dann gezielt durch ein entsprechendes Aufnahme- oder Erfassungsmittel, beispielsweise eine Klammer, einen Greifer oder einen Sauger, anfahrbar sind, die daraufhin das Wäschestück an der gewünschten oder als bevorzugt ermittelten Stelle erfassen. Es ist so automatisch die vorgesehene oder günstigste Stelle zum Erfassen des jeweiligen Wäschestücks ermittelbar und es kann danach automatisch auch diese Stelle von einem entsprechenden Mittel angefahren und automatisch erfasst werden. Dadurch entfallen die bisher manuell erfolgten Tätigkeiten zum Zuführen von Wäschestücken zu einer Wäschebehandlungseinrichtung.

Bevorzugt wird das Oberflächenprofil jedes Wäschestücks oder auch mehrerer im Haufen liegender oder zusammenhängender Wäschestücke durch dreidimensionale bildgebende Maßnahmen, beispielsweise durch mindestens eine 3D-Kamera oder einen Laserscanner, ermittelt. Dadurch entsteht ein dreidimensionales Bild des jeweiligen Wäschestücks. Durch eine Bildauswertung, insbesondere auf elektronischem und/oder rechnerischen Weg, können sie so die Koordinaten der gesuchten Stelle, vorzugsweise einer Ecke, oder die besonders begünstigste Stelle zum Ergreifen des Wäschestücks ermittelt werden. Durch gezieltes Anfahren dieser so ermittelten Stelle oder Ecke kann vom entsprechenden Aufnahme- oder Erfassungsmittel das Wäschestück dort zuverlässig erfasst werden, wo es am günstigsten zu greifen ist und/oder gegriffen werden soll.

Falls eine beliebige Stelle des Wäschestücks ergriffen werden soll, wird so vorgegangen, dass anhand des ermittelten Oberflächenprofils, insbesondere eines dreidimensionalen Oberflächenprofils, das eine Art Topografie darstellt, die Stelle mit dem größten Krümmungsgradienten ergriffen wird. An dieser Stelle steht quasi ein Teil des unregelmäßig liegenden oder sonst wie orientierten Wäschestücks vor oder ragt aus einem Haufen mehrerer Wäschestücke heraus. An dieser Stelle kann das Wäschestück dann zuverlässig und vollautomatisch maschinell aufgenommen werden.

Weiterhin ist es bevorzugt, das Wäschestück an einer solchen Ecke zu ergreifen, die aufgrund der Auswertung des ermittelten, vorzugsweise dreidimensionalen, Oberflächenprofils für einen Greifer oder ein sonstiges Erfassungsmittel am besten zugänglich ist. Es wird so durch die Ermittlung des Oberflächenprofils nicht nur mindestens eine Ecke des Wäschestücks ermittelt, sondern auch festgestellt, welche Ecke sich am besten erfassen lässt.

Eine bevorzugte Ausgestaltungs- oder Weiterbildungsmöglichkeit des Verfahrens sieht es vor, alternativ oder zusätzlich das Oberflächenprofil eines an einer beliebigen Stelle an einem Haltemittel der Vorrichtung hängenden Wäschestücks zu ermitteln und anhand dieses Oberflächenprofils das Wäschestück an einer anderen freien Ecke gezielt zu ergreifen, beispielsweise durch ein anderes Haltemittel. Es kommt so zum automatischen Ergreifen zweier Stellen, und zwar gegebenenfalls auch zweier Ecken des Wäschestücke.

Es ist auch denkbar, anhand des aufgenommenen Oberflächenprofils eines an einer Ecke an einem Haltemittel hängenden Wäschestücks die zu dieser Ecke benachbarte Ecke des Wäschestücks ausfindig zu machen und diese gezielt zu ergreifen, wodurch auf einfachste Weise ein automatisches Erfassen eines Wäschestücks an benachbarten Ecken einer Kante möglich ist, wobei es sich bevorzugt um die vorauseilende vordere Kante handelt, womit das Wäschestück der Wäschebehandlungseinrichtung zugeführt wird.

Eine bevorzugte Ausgestaltungsmöglichkeit des Verfahrens sieht es vor, anhand des ermittelten Oberflächenprofils bzw. der Topografie des Wäschestücks die Orientierung des Saums desselben zu ermitteln. So kann festgestellt werden, auf welcher Seite des Wäschestücks sich ein bei der Saumbildung umgeschlagener schmaler Randstreifen des Wäschestücks befindet. Aufgrund der durch die Auswertung des ermittelten Oberflächenprofils bekannten Lage des Saums wird es ermöglicht, das Wäschestück in einer solchen Ausrichtung der Wäschebehandlungseinrichtung zuzuführen, insbesondere auf einem Zuführförderer abzulegen, dass der Saum gezielt oben oder unten liegt und dadurch die gewünschte Lage oder Orientierung aufweist. Diese Ausrichtung des Saums erfolgte bei der manuellen Beschickung der Wäschebehandlungseinrichtung bzw. Eingabemaschine durch die Bedienungsperson. Das konnte zu fehlerhaften Eingaben führen. Durch die erfindungsgemäße Automatisierung sind solche Fehleingaben nicht mehr möglich.

Eine Vorrichtung zur Lösung der eingangs genannten Aufgabe weist die Merkmale des Anspruchs 4 auf. Bei dieser Vorrichtung ist im Verlauf des Transportsystems zum Zuführen einzelner Wäschestücke zu einer Wäschebehandlungseinrichtung, insbesondere einer Mangel oder einer dieser vorgeordneten Eingabemaschine, eine bilderzeugende Einrichtung vorgesehen. Es ist vorgesehen, dass so vor dem Transportsystem und/oder während des Verlaufs desselben mindestens ein Oberflächenprofil des Wäschestücks aufgenommen wird, wonach das Wäschestück zuverlässig ergriffen wird. Es wird eine beliebige Stelle des Wäschestücks so zuverlässig automatisch ergriffen, aber auch eine bestimmte Stelle, beispielsweise eine Ecke.

Alternativ oder zusätzlich können im Verlauf des Transportsystems an mehreren verschiedenen Stellen bilderzeugende Einrichtungen vorgesehen sein, die dazu dienen, unterschiedlich verfahrbare Klammern oder sonstige Greifmittel des Transportsystems gezielt an bestimmte Stellen, insbesondere Ecken, des Wäschestücks heranzufahren und diese zu greifen. Dadurch können Vorgänge des Umhängens des Wäschestücks, des Klammerwechsels, des Ergreifens bestimmter Stellen oder Ecken des Wäschestücks und/ oder der Umorientierung des Wäschestücks zuverlässig automatisch erfolgen.

Vorzugsweise befinden sich einzelne oder mehrere bildgebende Einrichtungen an verschiedenen Stellen des Transportsystems. Es können gleichartige bildgebende Einrichtungen sein, die zum Beispiel jeweils dreidimensionale Bilder erzeugen. Es ist aber auch denkbar, je nach Aufgabenzweck die jeweilige bildgebende Einrichtung unterschiedlich auszugestalten. Beispielsweise können bildgebende Einrichtungen, vor allem Kammern, vorgesehen sein, die zum einen Teil dreidimensionale Bilder erzeugen und zum anderen Teil zweidimensionale Bilder erzeugen. Denkbar ist es auch, dass die bildgebenden Einrichtungen an bestimmten Stellen der Förderstrecke ein Oberflächenprofil nur eines Teils des Wäschestücks erzeugen, nämlich nur eines solchen Teils, dessen Lage, Orientierung und/oder Ausbildung erfasst werden muss, um daraufhin diesen Teil entsprechend zu manipulieren, insbesondere zu ergreifen.

Es ist weiter denkbar, dass dem Transportsystem mindestens ein Rollenpaar zum Durchtritt wenigstens eines Teils eines Wäschestücks zugeordnet, wobei die Rollen des Rollenpaars um parallele aufrechte Drehachsen drehbar sind. Die Drehachsen können bevorzugt senkrecht verlaufen, aber auch leicht schräg zur Senkrechten. Die Rollen bilden einen Spalt, der zum mechanischen Auffinden einer bestimmten Stelle, insbesondere einer Ecke, des durch den Spalt zwischen den parallelen Rollen hindurchgezogenen Wäschestücks führt. Die senkrechte bzw. nahezu senkrechte Ausrichtung der parallelen Drehachsen der beiden nebeneinanderliegenden Rollen begünstigt die Eckenfindung und das Einlaufen eines an den Rollen vom Transportsystem vorbeibewegten Abschnitts des Wäschestücks. Dieser meist hintere Teil des Wäschestücks mit einer äußersten Ecke gelangt so zwangsläufig zwischen die Rollen und kann so zuverlässig detektiert werden. Das gilt auch für den Fall, dass von einer Klammer des Transportsystems mehrere Wäschestücke gleichzeitig ergriffen werden. Dann bildet sich immer nur eine hintere Ecke eines Wäschestücks zwischen dem aufrechten Rollenpaar aus.

Eine bevorzugte Weiterbildung der Vorrichtung sieht es vor, dass die Drehachsen der Rollen des Rollenpaars synchron unter Beibehaltung ihrer parallelen Ausrichtung verschwenkbar sind. Vorzugsweise sind die Drehachsen des Rollenpaars von einer aufrechten, das heißt senkrechten oder nahezu senkrechten Ausrichtung in eine waagerechte oder nahezu waagerechte Ausrichtung (und zurück) schwenkbar. Dieses führt dazu, dass zwischen den anfänglich aufrechten Rollen des Rollenpaars ein Teil des Wäschestücks zuverlässig einlaufen kann und nach dem Verschwenken des Rollenpaars die Ecke in eine Ausrichtung zum einfachen Greifen gelangt.

Eine vorteilhafte Ausgestaltungsmöglichkeit der Vorrichtung sieht es vor, dass die Rollen des Rollenpaars vorzugsweise gegensinnig drehend antreibbar sind, und zwar insbesondere mit gleicher Drehzahl. Durch Stoppen des Antriebs kann so temporär die gefundene Ecke des Wäschestücks klemmend gehalten werden, bis sie von einer Klammer oder einem sonstigen Haltemittel, beispielsweise auch einem Sauger, übernommen worden ist.

Bevorzugte Ausführungsbeispiele der Erfindung werden nachfolgend anhand der Zeichnung näher erläutert. In dieser zeigen:
- Fig. 1: eine schematische Darstellung der Zuführung von Wäschestücken zu einer Wäschebehandlungseinrichtung,
- Fig. 2: eine schematische Darstellung analog zur Fig. 1 eines zweiten Ausführungsbeispiels der Erfindung, und
- Fig. 3: eine schematische Darstellung analog zu den Fig. 1 und 2 eines dritten Ausführungsbeispiels der Erfindung.

Die Figuren zeigen schematisch unterschiedliche Vorgehensweisen für das automatische Zuführen von Wäschestücken zu einer Wäschebehandlungseinrichtung. Für die nachfolgende Beschreibung wird davon ausgegangen, dass es sich bei der nicht gezeigten Wäschebehandlungseinrichtung um eine Eingabemaschine zum Zuführen von vorzugsweise ausgebreiteten Wäschestücken zu einer Mangel handelt. Die Erfindung ist hierauf aber nicht beschränkt.

Ein einzelnes, gewaschenes und zumindest teilweise getrocknetes unausgebreitetes, beliebig orientiertes, zum Beispiel zusammengeknülltes Wäschestück 10 oder auch ein Haufen gewaschener und mindestens teilweise getrockneter Wäschestücke 10 wird mittels eines schematisch dargestellten Förderers 11 oder auch eines anderen Transportmittels zu einer Aufnahmestelle 12 transportiert. Von dieser Aufnahmestelle 12 wird jeweils ein einzelnes Wäschestück 10 ohne irgendwelche manuelle Hilfestellung vollautomatisch der nicht gezeigten Eingabemaschine zugeführt, und zwar vorzugsweise mit mindestens teilweise ausgebreiteter vorderer Kante 13 auf einem Zuführförderer der Eingabemaschine abgelegt oder an Klammern, insbesondere Spreizklammern, der Eingabemaschine übergeben.

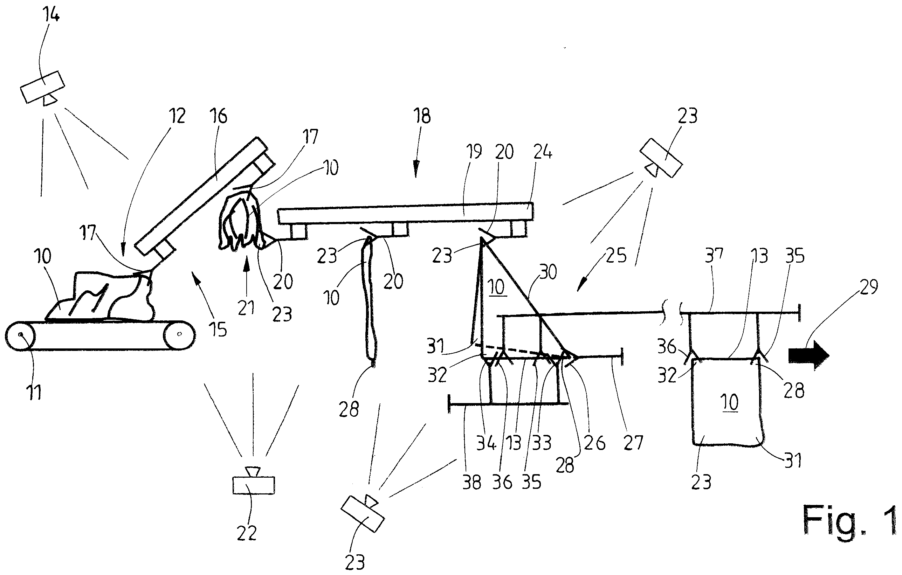

In der Fig. 1 ist ein einzelnes in beliebiger Orientierung auf dem Förderer 11 der Aufnahmestelle 12 sich befindendes Wäschestück 10 gezeigt. An der Aufnahmestelle 12 wird von dem eine unregelmäßige Orientierung aufweisenden Wäschestück 10 mittels mindestens einer gezeigten Kamera 14 ein Bild erzeugt. Es handelt sich hierbei vorzugsweise um ein dreidimensionales Bild. Dieses Bild des Oberflächenprofils stellt mindestens einen Teil einer Topografie des Wäschestücks 10 dar. In der Fig. 1 ist im Bereich der Aufnahmestelle 12 symbolisch nur eine einzelne Kamera 14 dargestellt. Hierbei kann es sich um eine 3D-Kamera oder einen Laserscanner handeln. Es ist aber auch denkbar, mehrere Kameras 14 an der Aufnahmestelle 12 vorzusehen, die zweckmäßigerweise an unterschiedlichen Stellen rings um das Wäschestück 10 an der Aufnahmestelle 12 verteilt angeordnet sind.

Der Aufnahmestelle 12 ist eine Greifeinrichtung 15 zugeordnet, die im gezeigten Ausführungsbeispiel eine schräg ansteigende Schiene 16 mit zwei daran geradlinig aufwärts verfahrbaren Klammern 17 aufweist. Die Klammern 17 ergreifen abwechselnd ein Wäschestück 10 an der Aufnahmestelle 12. Während die eine Klammer 17 ein Wäschestück 10 an der Aufnahmestelle 12 übernimmt, kann die andere Klammer 17 an einem gegenüberliegenden, höheren Endbereich der Schiene 16 ein zuvor ergriffenes Wäschestück 10 an einen anderen Förderer übergeben. Es ist aber auch denkbar, dass die Greifeinrichtung 15 nur eine einzige Klammer 17 oder ein sonstiges Erfassungsmittel, beispielsweise einen Sauger, aufweist. Die Greifeinrichtung 15 kann auch aus einem langhubigen Zylinder gebildet sein. Dann verfügt die Greifeinrichtung 15 nur über eine einzige Klammer 17.

An die Greifeinrichtung 15 schließt eine Transporteinrichtung 18 an. Die hier gezeigte Transporteinrichtung 18 verfügt über eine geradlinige Schiene 19, die im gezeigten Ausführungsbeispiel etwa horizontal verläuft. An der Schiene 19 sind geradlinig mehrere, vorzugsweise gleiche Klammern 20 verfahrbar. Ein oberer Endbereich der Schiene 16 der Greifeinrichtung 15 und ein zur Schiene 16 weisender Endbereich der Schiene 19 befinden sich an einer Übergabestelle 21 so dicht beieinander, dass ein von der Klammer 17 gehaltenes Wäschestück 10 im oberen Endbereich der Schiene 16 von einer Klammer 20 im zur Greifeinrichtung 15 weisenden Endbereich der Schiene 19 der Transporteinrichtung 18 übernommen werden kann.

Der Übergabestelle 21 zwischen benachbarten Endbereichen der Schienen 16 und 19 ist auch mindestens eine Kamera 22 zugeordnet. In der Fig. 1 ist zum Zwecke der einfacheren Darstellung nur eine einzige Kamera 22 gezeigt, obgleich auch an verschiedenen Stellen mehrere, vorzugsweise gleiche Kameras 22 vorgesehen sein können. Mit der mindestens einen Kamera 22 ist ein Bild, vorzugsweise ein dreidimensionales Bild, des Wäschestücks 10 an der Übergabestelle 21 erzeugbar. Dieses Bild gibt das Oberflächenprofil bzw. die Topografie mindestens eines Teils des Wäschestücks 10 im Bereich der Übergabestelle 21 wieder. Dementsprechend kann die sich jeweils an der Übergabestelle 21 befindende Klammer 20 der Transporteinrichtung 18 eine beliebige Ecke 23 des Wäschestücks 10 ergreifen.

Das der Greifeinrichtung 15 gegenüberliegende (in der Fig. 1 rechte) Ende 24 der Schiene 19 der Transporteinrichtung 18 befindet sich an einer Umorientierungsstelle 25. An dieser Umorientierungsstelle 25 hängt das von der Klammer 20 an der Ecke 23 gehaltene Wäschestück 10 zunächst frei herunter. Das Oberflächenprofil bzw. die Topografie des an der Umorientierungsstelle 25 von der Klammer 20 herunterhängendes Wäschestücks 10 wird wiederum durch mindestens eine Kamera 22 zur Erzeugung vorzugsweise eines dreidimensionalen Bildes ermittelt. Im gezeigten Ausführungsbeispiel sind zwei gegenüberliegende, vorzugsweise gleiche Kameras 22 gezeigt, die das Oberflächenprofil bzw. die Topografie des Wäschestücks 10 von gegenüberliegenden Seiten des Wäschestücks 10, vorzugsweise einer Außenseite und einer Innenseite, aufnehmen.

An der Umorientierungsstelle 25 ist eine Streckklammer 26 vorgesehen, die verfahrbar ist, vorzugsweise auf einer linearen Bahn 27. Beispielsweise kann dazu die Streckklammer 26 an einer schnellen Servoachse befestigt sein, die im einfachsten Falle durch einen Pneumatikzylinder gebildet ist. Die Streckklammer 26 erfasst eine Ecke 28 an der tiefsten Stelle des von der Klammer 20 herunterhängenden Wäschestücks 10. Diese untere Ecke 28 liegt der von der Klammer 20 gehaltenen oberen Ecke diagonal gegenüber.

Durch ein Verfahren der Strecklammer 26 in Zuführrichtung 29 zur nicht gezeigten Eingabemaschine wird bei stillstehender Klammer 20 das Wäschestück 10 zumindest etwas oder teilweise gestreckt, wodurch sich zwischen den diagonal gegenüberliegenden Ecken 23 und 28 eine Diagonalfalte 30 bildet. Dabei bilden sich die übrigen Ecken 31, 32 des Wäschestücks 10 aus, so dass das von den Kameras 23 aufgenommene Bild, das dem dreidimensionalem Oberflächenprofil des Wäschestücks 10 entspricht, zuverlässig die Ecken 31 und 32 detektieren bzw. erkennen lassen.

An der Umorientierungsstelle 25 ist unterhalb des Wäschestücks ein Klammerpaar aus zusammen- und auseinanderfahrbaren Klammern 33, 34 vorgesehen. Die Klammern 33, 34 sind durch geeignete Linearantriebe zusammen- und auseinanderfahrbar. Die Klammern 33 und 34 werden so weit verfahren und dadurch auf einen Abstand eingestellt, dass sie die noch von der Klammer 26 gehaltene Ecke 28 und eine der beim Strecken des Wäschestücks 10 frei gewordene Ecke 32 erfassen können. Die Klammern 33, 34 des Klammerpaars halten dann zwei benachbarte Ecken 28 und 32 einer Kante des Wäschestücks, bei der es sich eventuell schon um die vordere Kante 13 handeln kann.

Im gezeigten Ausführungsbeispiel ist über dem Klammerpaar mit den Klammern 33, 34 ein zweites Klammerpaar mit den Klammern 35, 36 vorgesehen. Die Klammern 35, 36 sind auch unabhängig voneinander zusammen- und auseinanderfahrbar, aber auch mit gleichem Abstand zusammen längs einer vorzugsweise geradlinigen Förderstrecke 37 in Zuführrichtung 29 verfahrbar. Die Klammern 35, 36 übernehmen das Wäschestück 10 von den Klammern 33, 34, und zwar auch an den Ecken 28 und 32. Das Wäschestück 10 ist dann ausgebreitet bzw. teilweise ausgebreitet, also vorausgebreitet, an gegenüberliegenden Ecken 28 und 32 der vorderen Kante 13 gehalten. Das Wäschestück 10 hängt dabei von den Klammern 35 und 36 herunter und kann längs der Förderstrecke 37 zur nicht gezeigten Eingabemaschine transportiert werden.

Es ist denkbar, das Klammerpaar mit den Klammern 35, 36 oder das Klammerpaar mit den Klammern 33, 34 entfallen zu lassen. Dann findet an der Umorientierungsstelle 25 keine Übergabe von einem Klammerpaar zum anderen statt. Vielmehr wird dann von dem Klammerpaar mit den Klammern 33, 34 oder 35, 36 das an den Ecken 28 und 32 gehaltene Wäschestück 10 direkt in Zuführrichtung 29 zur Eingabemaschine transportiert.

Das erfindungsgemäße Verfahren läuft mit der zuvor beschriebenen Vorrichtung gemäß der Fig. 1 wie folgt ab:
Vom Förderer 11 wird entweder ein einzelnes Wäschestück 10 oder ein Haufen mehrerer Wäschestücke 10 zur Aufnahmestelle 12 transportiert. Mehrere Wäschestücke 10 werden dabei an der Aufnahmestelle 12 sogleich separiert bzw. vereinzelt. Auch wenn nur ein einzelnes Wäschestück 10 zur Aufnahmestelle 12 transportiert wird, ist dieses ungeordnet, insbesondere zusammengeknüllt. Deswegen wird von mindestens einer Kamera 14 an der Aufnahmestelle 12 vorzugsweise ein dreidimensionales Bild vom Oberflächenprofil bzw. der Topografie des Wäschestücks 10 aufgenommen. Es wird dadurch die Struktur bzw. die Topografie des auf dem Förderer 11 liegenden Wäschestücks 10 dreidimensional abgebildet. Bevorzugt wird das dreidimensionale Bild des mindestens einen Wäschestücks 10 an der Aufnahmestelle 12 von einer Bildverarbeitung elektronisch aufbereitet und ausgewertet. Vor allem wird ermittelt, an welcher Stelle das Wäschestück 10 auf dem Förderer 11 am besten greifbar ist. Dazu wird vorzugsweise die Stelle des größten Krümmungsgradienten des Wäschestücks 10 an der Aufnahmestelle 12 elektronisch bzw. rechnerisch ermittelt und es werden die Koordinaten dieser Stelle bestimmt. Dementsprechend wird die Klammer 17 der Greifeinrichtung 15 an die besonders günstig zu greifende Stelle gezielt herangefahren und hier das Wäschestück 10 ergriffen.

Das dreidimensionale Bild bzw. Oberflächenmodell des Wäschestücks 10, das von der mindestens einen Kamera 14 aufgenommen wird, erstreckt sich in drei Dimensionen bzw. Raumrichtungen, nämlich in eine X-, eine Y- und eine Z-Richtung bzw. Achse. Dadurch ist jede Form des eine zufällige Lage einnehmenden Wäschestücks 10 erfassbar. Insbesondere lassen sich so Höhe und Tiefen des Wäschestücks ermitteln, die Rückschlüsse auf das Oberflächenprofil, insbesondere die Topografie, des Wäschestücks 10 zulassen.

Von der mindestens einen Kamera wird ein stereoskopisches dreidimensionales Bild der Topografie bzw. des Oberflächenprofils des Wäschestücks 10 erhalten. Das gilt insbesondere, wenn von mehreren Kameras 14 aus verschiedenen Blickwinkeln das Wäschestück 10 betrachtet wird. Durch diese spezielle Abbildung des Wäschestücks 10 mit zwei Kameras 14 oder mehr als zwei Kameras 14 aus verschiedenen Blickwinkeln lässt sich ein dreidimensionales, räumliches Bild und/oder Oberflächenmodell erstellen, indem zu jedem Punkt auf der Oberfläche des Wäschestücks 10 dreidimensionale Koordinaten zugeordnet werden. Dies kann durch eine Bildverarbeitung oder Bildweiterverarbeitung geschehen, beispielsweise mittels eines Computers.

Es reicht aus, wenn die mindestens eine Kamera 14 ein Bild des Wäschestücks 10 bzw. des Haufens mehrerer Wäschestücke 10 aufnimmt und dieses ausgewertet wird. Denkbar ist es aber auch, kontinuierlich Bilder aufzunehmen oder in regelmäßigen Zeitabständen ein Bild aufzunehmen und diese ggf. zu vergleichen.

Nachdem durch die elektrische und/oder rechnerische Bildauswertung der Topografie bzw. des Oberflächenprofils des Wäschestücks 10 mehrerer, vorzugsweise aller, sichtbaren Wäschestücke 10 des Wäschehaufens erfolgt ist, lässt sich mindestens eine Stelle ermitteln, die für das Erfassen bzw. Vereinzeln des Wäschestücks 10 besonders geeignet ist. Bei einer solchen Stelle handelt es sich bevorzugt um einen Bereich, wo das Wäschestück 10 eine große Krümmung oder einen großen Krümmungsgradienten aufweist. Beispielsweise kann es sich dabei um eine Falte, einen Knick, eine Kante oder eine Ecke des Wäschestücks 10 handeln. Diese geeignete Stelle wird durch eine Bildauswertung der erfassten Topografie bzw. des erfassten Oberflächenprofils des Wäschestücks 10 durch beispielsweise einen Computer errechnet. Dies kann derart geschehen, dass von jeweils zwei benachbarten Punkten der Winkel zwischen zwei Tangenten bzw. der tangentialen Ebene dieser Punkte ermittelt wird. Ist dieser Winkel spitz oder schneiden sich die Tangenten nicht, ist von einer großen Krümmung oder einem großen Krümmungsgradienten auszugehen. Eine solche Stelle eignet sich dann besonders gut zum Erfassen und/oder Vereinzeln des Wäschestücks 10.

Von der automatisch durch Bildauswertung rechnerisch ermittelten bevorzugten Stelle des Wäschestücks 10 werden die Koordinaten ebenfalls automatisch errechnet und an den Antrieb, vorzugsweise die schnelle Servoachse der Klammer 17 übertragen, sodass die Klammer 17 des Greifers genau an die errechnete, bevorzugte Stelle des Wäschestücks 10 gefahren werden kann. Werden mehrere Stellen des Wäschestücks 10 als zum Ergreifen geeignet ermittelt, wird diejenige Stelle ausgewählt, an die der Greifer 14 am schnellsten, insbesondere mit dem kürzesten Verfahrweg, heranfahrbar ist.

Im gezeigten Ausführungsbeispiel handelt es sich bei der aus dem durch die mindestens eine Kamera 14 aufgenommenen Bild abgeleiteten Stelle um eine beliebige Stelle des Wäschestücks 10. Es ist auch denkbar, dass die Auswertung des aufgenommenen Bildes, insbesondere des dreidimensionalen Bildes, dahingehend erfolgt wird, dass die Ermittlung einer Ecke des Wäschestücks 10 erfolgt und diese Ecke von der Klammer 17 der Greifeinrichtung 15 gezielt ergriffen wird.

Nachdem gemäß dem gezeigten Ausführungsbeispiel die Klammer 17 der Greifeinrichtung 15 das Wäschestück 10 an einer besonders gut zu greifenden, beliebigen Stelle ergriffen hat, wird es durch ein Verfahren der Klammer 17 längs der Schiene 16 von der Aufnahmestelle 12 wegbewegt und etwas angehoben. Am oberen Ende der Schiene 16 wird das Wäschestück 10 von mindestens einer Kamera 22 abgebildet, und zwar vorzugsweise wiederum als dreidimensionales Bild. Durch entsprechende Auswertung des von diesem Bild wiedergegebenen Oberflächenprofils des Wäschestücks 10 wird eine Ecke 23 des noch an der Klammer 17 hängenden Wäschestücks 10 aus dem von der mindestens einen Kamera 22 ermittelten Oberflächenprofil bzw. Topografie des Wäschestücks 10 ermittelt und von einer Klammer 20 der Transporteinrichtung 18 ergriffen. Die Klammer 17 der Greifeinrichtung 15 wird anschließend geöffnet, so dass das Wäschestück 10 mit der Ecke 23 von der Klammer 20 herunterhängt.

Durch Verfahren der Klammer 20 mit dem herunterhängenden Wäschestück 10 längs der Schiene 19 der Transporteinrichtung 18 gelangt das Wäschestück 10 von der Übergabestelle 21 zwischen der Greifeinrichtung 15 und der Transporteinrichtung 18 zur Umorientierungsstelle 25. Hier wird die am weitesten von der Klammer 20 herunterhängende, tiefste Stelle des Wäschestücks 10 von der Streckklammer 26 erfasst. Weil die tiefste Stelle des Wäschestücks 10 eine der Ecke 23 diagonal gegenüberliegende Ecke 28 ist, erfasst die Streckklammer 26 zwangsläufig die der oberen Ecke 23 diagonal gegenüberliegende Ecke 28 des Wäschestücks 10. Nun wird durch Verfahren der Streckklammer 26 auf der Bahn 27 in Zuführrichtung 29 das Wäschestück 10 zwischen den diagonal gegenüberliegenden Ecken 23 und 28 gestreckt, vorzugsweise nur leicht gestreckt, und dabei die Ecken 23 und 28 auseinandergezogen. Vorzugsweise werden die Ecken 23 und 28 soweit auseinandergezogen, dass das Wäschestück zwischen diesen Ecken 23 und 28 nur geringfügig stramm gezogen wird, aber keinen nennenswerten mechanischen Belastungen ausgesetzt wird. Beim Auseinanderziehen der diagonal gegenüberliegenden Ecken 23 und 28 durch Verfahren der Streckklammer 26 bildet sich zwischen diesen Ecken 23 und 28 die Diagonalfalte 30 im Wäschestück 10 aus. Gleichzeitig kommt es dabei zu einer Ausbildung der übrigen Ecken 31 und 32 des Wäschestücks 10, und zwar derart, dass diese von der Umorientierungsstelle 25 zugeordneten Kameras 22 eindeutig erfassbar und abbildbar sind.

Durch eine Auswertung des von den Kameras 22 und oder gegebenenfalls nur einer Kamera 22 aufgenommenen Bildes des gestreckt gehaltenen Wäschestücks 10 sind die Positionen der Ecken 31 und 32 rechnerisch ermittelbar. Von den so ermittelten Ecken 31 und 32 wird entweder eine solche Ecke 31 bzw. 32 ergriffen, die am leichtesten ergreifbar ist oder eine solche Ecke 31 bzw. 32, die bei einem rechteckigen Wäschestück 10 zusammen mit der von der Streckklammer 26 gehaltenen Ecke 28 die gewünschte vordere Kante 13 des Wäschestücks 10, nämlich entweder eine Querkante oder eine Längskante, begrenzt.

Wie im in der Fig. 1 gezeigten Ausführungsbeispiel wird von der Klammer 34 die der Ecke 28 benachbarte Ecke 32 ergriffen, die zu einer Querkante des Wäschestücks 10 gehört. In diesem Falle wird das Wäschestück 10 mit der kürzeren Querkante als vorauseilende vordere Kante 13 der Eingabemaschine zugeführt und auf den Zuführförderer derselben abgelegt. Wenn das Wäschestück 10 mit der längeren Längskante als vorauseilende vordere Kante der Eingabemaschine zugeführt werden soll, wird von der Klammer 34 die andere beim Ausstrecken des Wäschestücks 10 sich ausbildende Ecke 31 ergriffen.

Die Klammern 33 und 34 des Klammerpaars sind entlang einer vorzugsweise gradlinigen Förderstrecke 38 gezielt an die Ecken 28 und 32 heranfahrbar, wobei das Heranfahren der Klammer 32 an die beim Strecken des Wäschestücks frei kommende oder sich ausbildende Ecke 32 gesteuert wird anhand einer rechnerischen Auswertung des durch mindestens eine Kamera 22 an der Umorientierungsstelle 25 aufgenommenen dreidimensionalen Bildes des Wäschestücks.

Im gezeigten Ausführungsbeispiel ist über den Klammern 33 und 34 ein zweites Klammerpaar mit Klammern 35 und 36 vorgesehen. Die Klammern 35 und 36 übernehmen die vordere Kante 13 an ihren Ecken 28 und 32 aus den Klammern 33 und 34. Das danach mit den Ecken 32 und 28 unter den Klammern 35, 36 hängende Wäschestück 10 wird nun längs der Förderstrecke 37 in Zuführrichtung 29 zur Eingabemaschine transportiert und dabei vorzugsweise entweder direkt auf den Zuführförderer der Eingabemaschine abgelegt oder in Spreizklammern der Eingabemaschine übergeben.

An der Umorientierungsstelle 25 wird durch die mindestens eine Kamera 22 bei einem gesäumten Wäschestück 10 auch ermittelt, auf welcher Seite des Wäschestücks die den Saum bildenden schmalen Randstreifen des Wäschestücks 10 liegen. Vor allem bei Tischwäsche muss die Saumseite des Wäschestücks 10, das heißt, die Seite, auf der der umgeschlagene schmale Randstreifen des Wäschestücks 10 sich befindet, so in eine Mangel eingegeben werden, dass die Saumseite mit der Mangelwalze in Kontakt kommt, aber nicht mit der Plättfläche der stillstehenden Mangelmulde. Weil durch die mindestens eine Kamera 22 ermitteltbar ist, auf welcher der von den Kameras 22 betrachteten Seiten des Wäschestücks 10 sich der Saum befindet, kann das Wäschestück 10 durch wahlweises Zuführen zur Eingabemaschine mit an den Klammern 33, 34 oder 35, 36 hängenden Ecken 28 und 32 in der zum Mangeln richtigen Orientierung der Eingabemaschine zugeführt werden.

Wenn an der Umorientierungsstelle 25 nur ein Klammerpaar mit Klammern 33, 34 oder Klammern 35, 36 vorgesehen ist, kann die Umorientierung des Wäschestücks 10 anhand der von mindestens einer Kamera 22 aufgenommenen Saumlage auch durch ein Ändern der Reihenfolge der Klammern 35, 36 bzw. 33, 34 erfolgen, indem beispielsweise längs der Förderstrecke 37 oder 38 die eine Klammer die andere überholt.

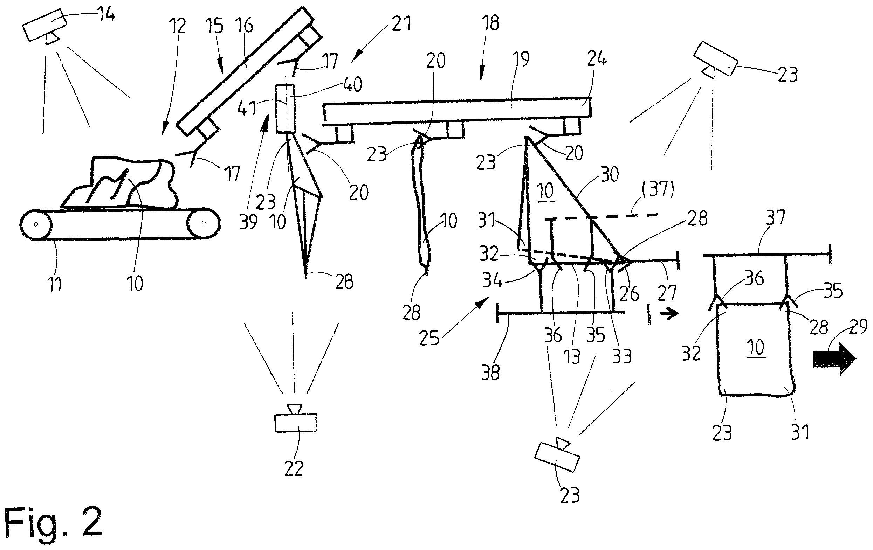

Die Fig. 2 zeigt eine Vorrichtung die prinzipiell der zuvor beschriebenen Vorrichtung entspricht, wobei für gleiche Teile gleiche Bezugsziffern verwendet werden. Bei der Vorrichtung der Fig. 2 ist an der Übergabestelle 21 ein Rollenpaar 39 vorgesehen. Das Rollenpaar 39 verfügt über zwei nebeneinanderliegende, aufrechte Rollen 40, von denen in der Fig. 2 nur die vorn liegende Rolle 40 gezeigt ist. Die beiden gleichen Rollen 40 sind um parallele, vertikale Drehachsen 41 drehbar. Zwischen den Rollen 40 ist ein schmaler Spalt gebildet zum Hindurchtritt mindestens eines Teils des Wäschestücks 10.

Im gezeigten Ausführungsbeispiel sind die parallelen aufrechten Rollen 40 gegensinnig antreibbar, und zwar so, dass sie das Wäschestück 10 oder nur einen Teil desselben durch den Spalt zwischen benachbarten Rollen transportierten. Es ist auch denkbar, nur eine der beiden parallelen Rollen 40 anzutreiben, sodass die zweite Rolle 40 freidrehend mitläuft, wenn zwischen den Rollen 40 ein Wäschestück 10 hindurchtransportiert wird.

Das Wäschestück 10 wird durch Öffnen der Klammer 17 oberhalb der Rollen 40 abgeworfen, wodurch es infolge der aufrechten Anordnung der Rollen 40 des Wäschestücks 10 in den Spalt zwischen den Rollen 40 gelangt und quer durch den Spalt hindurchtransportiert wird. Sobald das Wäschestück 10 nahezu durch den Spalt zwischen den Rollen 40 hindurchtransportiert ist und nur noch mit einem hinteren Zipfel oder einer hinteren Ecke, vorzugsweise der Ecke 28, im Spalt hängt, wird dies durch ein entsprechendes Detektionsmittel ermittelt und dementsprechend die Klammer 20 der Transporteinrichtung 18 so gesteuert, dass sie das Wäschestück 10 am hinteren Zipfel oder der hinteren Ecke ergreift, und zwar entweder wenn dieses noch mit der äußersten Ecke oder dem äußersten Zipfel sich gerade noch im Spalt zwischen den Rollen 40 befindet oder unmittelbar nachdem der hinterste Zipfel oder die hinterste Ecke des Wäschestücks 10 den Spalt zwischen den Rollen 40 verlassen hat.

Es ist denkbar, die Drehachsen 41 der beiden benachbarten Rollen 40 leicht gegensinnig schräg anzuordnen, und zwar so, dass ein sich nach unten hin verjüngender und leicht V-förmiger Spalt zwischen den Rollen 40 entsteht.

Es ist auch denkbar, dass der Spalt zwischen den Rollen 40 unten geschlossen ist durch einen Querbalken unter den Rollen 40 oder eine quergerichtete, horizontale Rolle vor oder hinter den beiden parallelen Rollen 40.

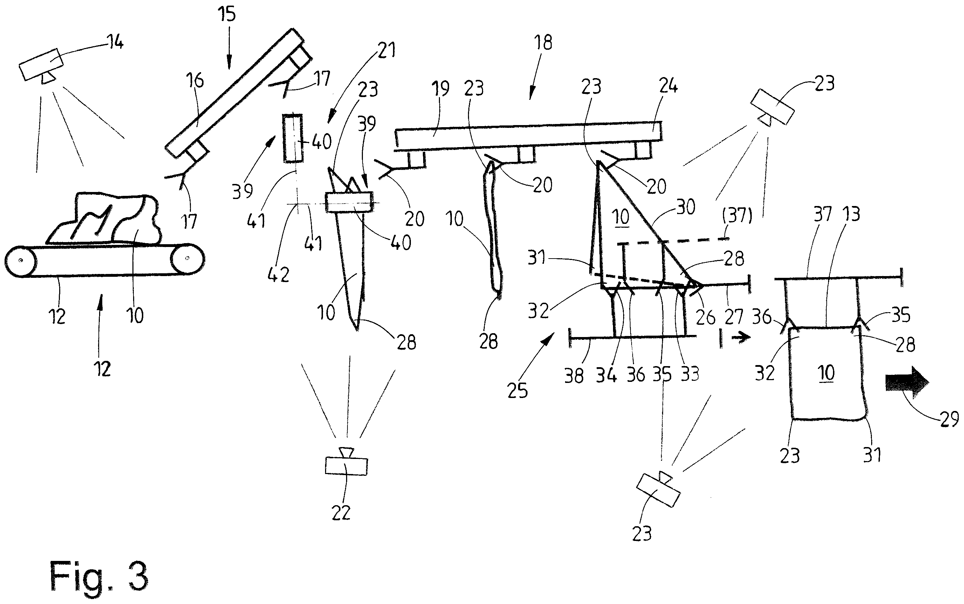

Die Fig. 3 zeigt eine Abwandlung der in der Fig. 2 dargestellten Vorrichtung. Bei dieser Abwandlung ist das Paar benachbarter Rollen 40 verschwenkbar. Konkret sind die Rollen 40 um ihre Drehachsen 41 gemeinsam verschwenkbar von einer Ausgangsposition mit senkrechten Drehachsen 41 in eine Position mit etwa horizontal verlaufenden Drehachsen 41. Die Verschwenkung der Rollen 40 erfolgt um eine horizontale Schwenkachse 42, die durch die Drehachsen 41 beider Rollen 40 verläuft und sich mit Abstand unterhalb der Rollen 40 befindet. Im gezeigten Ausführungsbeispiel sind die Rollen 40 gleichermaßen um etwa 90° verschwenkbar.

In der hochgeschwenkten Ausgangsposition der Rollen 40 verlaufen die Drehachsen 41 senkrecht, können aber auch leicht schräg zur Senkrechten verlaufen. In dieser Ausgangsstellung der Rollen 40 wird von der Klammer 17 ein Wäschestück 10 über den Rollen 40 abgeworfen. Dadurch gelangt das Wäschestück 10 in den Spalt zwischen den senkrecht oder annähernd senkrecht ausgerichteten Rollen 40. Es werden anschließend die Rollen 40 gleichermaßen gemeinsam um ihre horizontalen Schwenkachsen 42 um etwa 90° verschwenkt, so dass die Rollen 40 in eine horizontale oder annähernd horizontale Lage gelangen. In dieser horizontalen Lage werden die Rollen 40 solange gegensinnig angetrieben, bis ein hinterster - aufgrund des Verschwenkens der Rollen 40 in die Horizontale - oberer Zipfel oder eine Ecke 23 sich noch soeben zwischen den Rollen 40 befindet, also ein Großteil des Wäschestücks durch die Rollen 40 hindurchtransportiert worden ist. Gegebenenfalls kann dann der Antrieb der Rollen 40 gestoppt werden. Dadurch befindet sich die Ecke 23 des Wäschestücks 10 gezielt oberhalb der Rollen 40, indem die Ecke 23 etwas nach oben aus dem Spalt zwischen den Rollen 40 herausragt. An dieser Ecke 23 kann die Klammer 20 der Transporteinrichtung 18 dann zuverlässig das Wäschestück 10 ergreifen und abtransportieren. Dabei kann das Wäschestück 10 aus dem Spalt zwischen den Rollen 40 herausgezogen werden. Es ist auch denkbar, das Wäschestück durch Öffnen des Spalts zwischen den Rollen 40 freizugeben oder durch gegensinnigen Antrieb der Rollen 40 das Wäschestück 10 aus dem Spalt herauszubewegen. Dies kann auch derart geschehen, dass nach dem Ergreifen der Ecke 23 des Wäschestücks 10 von der Klammer 20 die Rollen 40 in entgegengesetzter Richtung drehend angetrieben werden.

Nachdem das Wäschestück 10 mittels der Transporteinrichtung 18 von den beiden parallelen Rollen 40 abtransportiert ist und dadurch die Rollen 40 wieder frei sind, werden sie zurückgeschwenkt in die vertikale Ausgangsposition zur Übernahme eines nächsten Wäschestücks 10.

Die automatische Eckenfindung mit dem zuvor beschriebenen Paar paralleler Rollen 40 kann auch an beliebigen anderen Stellen der in den Fig. 1 bis 3 beispielhaft dargestellten und beschriebenen Vorrichtungen vorgesehen sein. Denkbar ist es auch, die automatische Eckenfindung zwischen zwei parallelen Rollen 40 woanders im Wäschereibereich einzusetzen als es in den Fig. 1 bis 3 dargestellt ist.

### Bezugszeichenliste:

| | | | |
|---|---|---|---|
| 10 | Wäschestück | 36 | Klammer |
| 11 | Förderer | 37 | Förderstrecke |
| 12 | Aufnahmestelle | 38 | Förderstrecke |
| 13 | vordere Kante | 39 | Rollenpaar |
| 14 | Kamera | 40 | Rolle |
| 15 | Greifeinrichtung | 41 | Drehachse |
| 16 | Schiene | 42 | Schwenkachse |
| 17 | Klammer | | |
| 18 | Transporteinrichtung | | |
| 19 | Schiene | | |
| 20 | Klammer | | |
| 21 | Übergabestelle | | |
| 22 | Kamera | | |
| 23 | Ecke | | |
| 24 | Ende | | |
| 25 | Umorientierungsstelle | | |
| 26 | Streckklammer | | |
| 27 | Bahn | | |
| 28 | Ecke | | |
| 29 | Zuführrichtung | | |
| 30 | Diagonalfalte | | |
| 31 | Ecke | | |
| 32 | Ecke | | |
| 33 | Klammer | | |
| 34 | Klammer | | |
| 35 | Klammer | | |

## Patentansprüche

1. Verfahren zum Zuführen von Wäschestücken (10) zu einer Mangel oder einer sonstigen Wäschebehandlungseinrichtung, wobei ein Wäschestück (10) ergriffen und dieses Wäschestück (10) an zwei benachbarten Ecken (28, 32) einer vorderen Kante (13) ausgebreitet und mit dieser vorderen Kante (13) voran zur Wäschebehandlungseinrichtung transportiert wird, **dadurch gekennzeichnet, dass** bei von einer gehaltenen Ecke (23) herunterhängendem Wäschestück (10) eine tiefste Ecke (28) dieses Wäschestücks (10) ergriffen und gestreckt wird, wodurch die übrigen Ecken (31, 32) des Wäschestücks sich derart ausbilden, dass sie greiffähige Positionen einnehmen, wobei die Positionen der sich beim Ausbreiten des Wäschestücks (10) ausbildenden freien Ecken (31, 32) durch ein bildgebendes Verfahren ermittelt werden, und wobei
das Wäschestück (10) an diagonal gegenüberliegenden Ecken (23, 28) ausgebreitet wird und von den sich dabei ausbildenden übrigen Ecken (31, 32) eine zu den gehaltenen Ecken (23, 28) benachbarte Ecke (31, 32) gesucht wird und wobei
bei an den diagonal gegenüberliegenden Ecken (23, 28) gehaltenem Wäschestück (10) eine der sich beim Ausbreiten ausbildende Ecke (31, 32) ergriffen und eine der zum Ausbreiten gehaltenen Ecke (23) losgelassen wird.

2. Verfahren nach Anspruch 1, **dadurch gekennzeichnet, dass** das Wäschestück (10) an diagonal gegenüberliegenden Ecken (23, 28) ausgebreitet und gestreckt wird und von den sich dabei ausbildenden übrigen Ecken (31, 32) eine zu den gehaltenen Ecken (23, 28) benachbarte Ecke (31, 32) gesucht wird.

3. Verfahren nach Anspruch 2, **dadurch gekennzeichnet, dass** bei an den diagonal gegenüberliegenden Ecken (23, 28) gehaltenem Wäschestück (10) eine der sich beim Strecken ausbildende Ecke (31, 32) ergriffen und eine der zum Strecken gehaltenen Ecke (23) losgelassen wird, wobei vorzugsweise eine solche sich beim Strecken ausbildende Ecke (31, 32) ergriffen wird, die zu der gewünschten vorderen Kante (13) des Wäschestücks (10) gehört.

4. Vorrichtung zum Zuführen von Wäschestücken (10) zu einer Mangel oder einer sonstigen Wäschebehandlungseinrichtung, wobei die Vorrichtung derart eingerichtet ist, das Verfahren nach Anspruch 1 auszuführen und wobei die Vorrichtung ein Transportsystem mit verfahrbaren Klammern (17, 20, 33, 34, 35, 36) zum Halten jeweils einer Ecke (23, 28, 31, 32) eines Wäschestücks (10) aufweist, wobei vor und/oder im Verlauf des Transportsystems mindestens eine bilderzeugende Einrichtung zur Erzeugung eines Oberflächenprofils des Wäschestücks (10) angeordnet ist.

5. Vorrichtung nach Anspruch 4, **dadurch gekennzeichnet, dass** bildgebende Einrichtungen an verschiedenen Stellen des Transportsystems, vorzugsweise an mehreren Stellen, wo zum Beispiel eine Ecke (23, 28, 31, 32) des Wäschestücks (10) ergriffen wird, angeordnet sind.

6. Vorrichtung zum Zuführen von Wäschestücken (10) zu einer Mangel oder einer sonstigen Wäschebehandlungseinrichtung nach den Ansprüchen 4 und/ oder 5, **dadurch gekennzeichnet, dass** dem Transportsystem mindestens ein Rollenpaar (39) zum Durchtritt wenigstens eines Teils eines Wäschestücks (10) zugeordnet ist und die beiden Rollen (40) des Rollenpaars (39) um parallele, aufrechte und/oder in eine aufrechte oder nahezu aufrechte Position aufweisende oder bringbare Drehachsen (41) drehbar sind.

7. Vorrichtung nach Anspruch 6, **dadurch gekennzeichnet, dass** die Drehachse (41) der Rollen (40) des Rollenpaars (39) synchron unter Beibehaltung ihrer parallelen Ausrichtung verschwenkbar sind, vorzugsweise von einer aufrechten oder nahezu aufrechten Ausrichtung in eine waagerechte oder nahezu waagerechte Ausrichtung.

8. Vorrichtung nach Anspruch 6 oder 7, **dadurch gekennzeichnet, dass** die Rollen (40) des Rollenpaars (39) gegensinnig drehend antreibbar sind, vorzugsweise mit gleicher Drehzahl.

## Claims

1. Method for feeding laundry items (10) to an ironer or some other laundry-treatment device, wherein a laundry item (10) is gripped and the laundry item (10) is spread out at two adjacent corners (28, 32) of a front edge (13) and transported to the laundry-treatment device with this front edge (13) in front, **characterized in that**, with a laundry item (10) hanging down from a corner (23) which is being held, the lowermost corner (28) of this laundry item (10) is gripped and straightened, this resulting in the other corners (31, 32) of the laundry item assuming grippable positions, wherein the positions of the free corners (31, 32) which form when the laundry item (10) is being spread out are identified by an imaging technique, and wherein
the laundry item (10) is spread out at diagonally opposite corners (23, 28) and, of the other corners (31, 32) which form in the process, a corner (31, 32) adjacent to the corners (23, 28) being held is sought, and wherein, with the laundry item (10) being held at the diagonally opposite corners (23, 28), a corner (31, 32) which forms during the spreading-out operation is gripped and a corner (23) which is held for the spreading-out operation is released.

2. Method according to Claim 1, **characterized in that** the laundry item (10) is spread out and straightened at diagonally opposite corners (23, 28) and, of the other corners (31, 32) which form in the process, a corner (31, 32) adjacent to the corners (23, 28) being held is sought.

3. Method according to Claim 2, **characterized in that**, with the laundry item (10) being held at the diagonally opposite corners (23, 28), a corner (31, 32) which forms during the straightening operation is gripped and a corner (23) which is held for the straightening operation is released, wherein preferably a corner (31, 32) which forms during the straightening operation is gripped and is one which belongs to the desired front edge (13) of the laundry item (10).

4. Apparatus for feeding laundry items (10) to an ironer or some other laundry-treatment device, wherein the apparatus is designed to implement the method according to Claim 1, and wherein the apparatus has a transporting system with displaceable pegs (17, 20, 33, 34, 35, 36) for holding a respective corner (23, 28, 31, 32) of a laundry item (10), wherein at least one image-generating device for generating a surface profile of the laundry item (10) is arranged upstream of the transporting system and/or over the course of the transporting system.

5. Apparatus according to Claim 4, **characterized in that** imaging devices are arranged at various locations of the transporting system, preferably at a number of locations where for example a corner (23, 28, 31, 32) of the laundry item (10) is gripped.

6. Apparatus for feeding laundry items (10) to an ironer or some other laundry-treatment device according to Claims 4 and/or 5, **characterized in that** the transporting system is assigned at least one pair (39) of rollers for the through-passage of at least part of a laundry item (10) and the two rollers (40) of the pair (39) of rollers are rotatable about axes of rotation (41) which are parallel, upright and/or are in, or can be moved into, an upright or more or less upright position.

7. Apparatus according to Claim 6, **characterized in that** the axes of rotation (41) of the rollers (40) of the pair (39) of rollers can be pivoted synchronously, the parallel orientation thereof being maintained in the process, preferably from an upright or more or less upright orientation into a horizontal or more or less horizontal orientation.

8. Apparatus according to Claim 6 or 7, **characterized in that** the rollers (40) of the pair (39) of rollers can be driven in opposite directions of rotation, preferably at the same speed of rotation.

## Revendications

1. Procédé pour amener des pièces de linge (10) à une calandre ou à un autre dispositif de traitement du linge, dans lequel une pièce de linge (10) est saisie et cette pièce de linge (10) est étalée sur deux coins voisins (28, 32) d'un bord avant (13) et est transportée avec ce bord avant (13) en avant vers le dispositif de traitement du linge, **caractérisé en ce que**, lorsque le linge (10) pend d'un coin maintenu (23), un coin le plus bas (28) de cette pièce de linge (10) est saisi et étiré, ce qui fait que les autres coins (31, 32) de la pièce de linge se forment de telle sorte qu'ils prennent des positions leur permettant d'être saisis, les positions des coins libres (31, 32) qui se forment lors de l'étalement de la pièce de linge (10) étant déterminées par un procédé d'imagerie, et
la pièce de linge (10) étant étalée au niveau de coins diagonalement opposés (23, 28) et, à partir des coins restants (31, 32) qui sont formés, il est recherché un coin (31, 32) adjacent aux coins (23, 28) maintenus et, lorsque la pièce de linge (10) est maintenue au niveau des coins (23, 28) diagonalement opposés, l'un des coins (31, 32) formé lors de l'étalement est saisi et l'un des coins (23) retenu pour l'étalement est relâché.

2. Procédé selon la revendication 1, **caractérisé en ce que** la pièce de linge (10) est étalée et étirée au niveau de coins diagonalement opposés (23, 28) et, parmi les autres coins (31, 32) qui se forment alors, il est recherché un coin (31, 32) voisin des coins (23, 28) maintenus.

3. Procédé selon la revendication 2, **caractérisé en ce que**, lorsque la pièce de linge (10) est maintenue par les coins diagonalement opposés (23, 28), l'un des coins (31, 32) se formant lors de l'étirage est saisi et l'un des coins (23) maintenu pour l'étirage est relâché, un tel coin (31, 32) se formant lors de l'étirage étant de préférence saisi, qui appartient au bord avant souhaité (13) de la pièce de linge (10).

4. Dispositif pour amener des pièces de linge (10) à une calandre ou à un autre dispositif de traitement du linge, le dispositif étant agencé de manière à mettre en œuvre le procédé selon la revendication 1 et le dispositif présentant un système de transport avec des pinces mobiles (17, 20, 33, 34, 35, 36) pour maintenir respectivement un coin (23, 28, 31, 32) d'une pièce de linge (10), au moins un dispositif de formation d'image étant disposé avant et/ou sur le parcours du système de transport afin de générer un profil de surface de la pièce de linge (10).

5. Dispositif selon la revendication 4, **caractérisé en ce que** des dispositifs d'imagerie sont disposés à différents endroits du système de transport, de préférence à plusieurs endroits où, par exemple, un coin (23, 28, 31, 32) de la pièce de linge (10) est saisi.

6. Dispositif pour amener des pièces de linge (10) à une calandre ou à un autre dispositif de traitement du linge selon les revendications 4 et/ou 5, **caractérisé en ce que** le système de transport est associé à au moins une paire de rouleaux (39) pour le passage d'au moins une partie d'une pièce de linge (10) et les deux rouleaux (40) de la paire de rouleaux (39) sont aptes à tourner autour d'axes de rotation verticaux (41) parallèles, qui ont une position verticale ou presque verticale ou sont aptes à être amenés dans une telle position.

7. Dispositif selon la revendication 6, **caractérisé en ce que** les axes de rotation (41) des rouleaux (40) de la paire de rouleaux (39) sont aptes à pivoter de manière synchrone en conservant leur orientation parallèle, de préférence depuis une orientation verticale ou quasi-verticale jusqu'à une orientation horizontale ou quasi-horizontale.

8. Dispositif selon la revendication 6 ou la revendication 7, **caractérisé en ce que** les rouleaux (40) de la paire de rouleaux (39) sont aptes à être entraînés en rotation en sens inverse, de préférence à la même vitesse de rotation.
